# EUROPEAN PATENT APPLICATION

(11) **EP 2 698 725 A1**
(43) Date of publication of application: **19.02.2014**
(21) Application number: 12770815.4
(22) Date of filing: 31.01.2012
(51) Int. Cl.: G06F 17/22, G06F 3/023, H03M 11/04

(54) **INFORMATION INPUT DEVICE**

(30) Priority: 11.04.2011 JP 2011087429
(71) Applicant: NEC CASIO Mobile Communications, Ltd., Kawasaki-shi Kanagawa 211-8666 (JP)
(72) Inventor: KOKUBU, Akiteru, Kawasaki-shi, Kanagawa 211-8666 (JP)
(74) Representative: Vossius & Partner
(86) International application number: PCT/JP2012/052138
(87) International publication number: WO 2012/140935

(57) **Abstract**

Control section (150) reads first information that is conversion candidates of information that has been input to input section (120) from character conversion candidate storage section (130), causes the first information that has been read to be displayed as conversion candidates on display section (110), reads second information correlated with the first information from pictorial symbol conversion candidate storage section (140) if the first information displayed on display section (110) is selected, and causes the second information and third information in which the first information and the second information are added to be displayed as conversion candidates on display section (110).

## Description

### TECHNICAL FIELD

The present invention relates to information input devices, information input methods, and programs that input information.

### BACKGROUND ART

Ordinarily, people transmit electronic mail and receive it with their mobile terminal. Techniques that convert user's input characters into pictorial symbols and then input the converted pictorial symbols to a body of electronic mail have been contemplated (for example, refer to Patent Literatures 1 to 3). Recently, mobile terminals that are provided with an HTML (Hyper Text Markup Language) function that can decorate contents of electronic mail with not only text that contains pictorial symbols but also images have been placed in the market.

Since HTML mail exaggeratedly decorates entire contents of electronic mail or is bothersome to decorate the contents, users hesitate to use the HTML mail. On the other hand, the opportunity and need to use the HTML mail that utilizes extended pictorial symbols (hereinafter referred to as HTML pictorial symbols) are increasing for users who do not satisfy ordinary pictorial symbols since the variations of ordinary pictorial symbols are few.

HTML pictorial symbols are coded in the animation GIF (Graphics Interchange Format) and have a fixed aspect ratio. HTML pictorial symbols can be placed in electronic mail as HTML mail. They not only have been stored in mobile terminals, but can also be downloaded from WEB sites. Moreover, HTML pictorial symbols contained in received electronic mail can be used. Thus, HTML pictorial symbols are very versatile.

To input pictorial symbols (hereinafter, they mean both ordinary pictorial symbols and HTML pictorial symbols) into the text of electronic mail that the user is composing, he or she needs to call up a pictorial symbol table in a dedicated input mode, select his or her desired symbol therefrom, and insert the selected symbol into text of the electronic mail.

Next, the case in which text that contains a pictorial symbol is input as the body of electronic mail will be exemplified.

"Tomorrow, let's go there by car".

If one user wants to replace the character "car" with a pictorial symbol that represents "car", he or she needs to input "Tomorrow, let's go by <a pictorial symbol that represents a car>" (case 1).

If another user wants to leave characters "car" and also use a pictorial symbol that represents "car," he or she needs to input "Tomorrow, let's go by car <a pictorial symbol that represents a car>" (case 2).

### RELATED ART LITERATURE

### PATENT LITERATURE

Patent Literature 1: JP2008-129687A, Publication
Patent Literature 2: JP2010-026909A, Publication
Patent Literature 3: JP2010-079782A, Publication

### SUMMARY OF THE INVENTION

### PROBLEM TO BE SOLVED BY THE INVENTION

In the foregoing case 1, the user needs to input "Tomorrow," call a pictorial symbol table, select a pictorial symbol that represents "car" from the table, and then confirm the selected pictorial symbol.

In the foregoing case 2, the user needs to input "Tomorrow, let's go there", input "by car", call a pictorial symbol table, select a pictorial symbol that represents a "car", and then confirm the selected pictorial symbol.

Thus, since the input method in case 1 is different from that in case 2, the user needs to change the input method depending on whether it is case 1 or case 2 and may feel that this is burdensome.

An object of the present invention is to provide information input devices, information input methods, and programs that can solve the foregoing problems.

### MEANS THAT SOLVE THE PROBLEM

An information input device of the present invention includes:
a display section;
an input section that inputs information;
a first storage section that stores conversion candidates of said information as first information;
a second storage section that correlatively stores said first information and said second information; and
a control section that reads said first information that is conversion candidates of the information that has been input to said input section from said first storage section, causes the first information that has been read to be displayed as conversion candidates on said display section, reads said second information correlated with the selected first information from said second storage section if the first information displayed on said display section is selected, and causes said second information and third information in which said first information and said second information are added to be displayed as conversion candidates on said display section.

An information input method of the present invention includes the processes of:
inputting information to a device;
reading first information that is conversion candidates of said input information from a first storage section that has stored the first information;
displaying the first information that has been read from said first storage section as conversion candidates;
reading second information correlated with the selected first information from a second storage section that has correlatively stored said first information and said second information if said displayed first information is selected; and
displaying the second information that has been read from said second storage section and third information in which said second information is added to said first information as conversion candidates.

A program of the present invention is a program that causes a computer to execute the procedures including:
inputting information to a device;
reading first information that is conversion candidates of said input information from a first storage section that has stored the first information;
displaying the first information that has been read from said first storage section as conversion candidates;
reading second information correlated with the selected first information from a second storage section that has correlatively stored said first information and said second information if said displayed first information is selected; and
displaying the second information that has been read from said second storage section and third information in which said second information is added to said first information as conversion candidates.

### EFFECT OF THE INVENTION

As described above, the present invention allows the user to easily input text that contains both characters and pictorial symbols.

### BRIEF DESCRIPTION OF DRAWINGS

Fig. 1 is a schematic diagram showing an information input device according to an embodiment of the present invention.
Fig. 2 is a schematic diagram showing an example of first information stored in a character conversion candidate storage section shown in Fig. 1.
Fig. 3 is a schematic diagram showing an example of first information and second information stored in a pictorial symbol conversion candidate storage section shown in Fig. 1.
Fig. 4 is a flow chart showing an example of a process that registers characters and pictorial symbol conversion candidates to the pictorial symbol conversion candidate storage section shown in Fig. 1.
Fig. 5A is a schematic diagram showing an example of an appearance on a display section when characters "kuru" have been input to an input section shown in Fig. 1.
Fig. 5B is a schematic diagram showing an example of an appearance on the display section when a cursor has been moved and thereby the character "car" have been selected.
Fig. 5C is a schematic diagram showing an example of an appearance on the display section when a pictorial symbol table has been called up.
Fig. 5D is a schematic diagram showing an example of an appearance on the display section shown in Fig. 1 when one of pictorial symbols has been selected from those displayed thereon and registered.
Fig. 6 is a flow chart describing an example of a process that a control section performs to cause pictorial symbols, as predictive conversion candidates, to be displayed on the display section shown in Fig. 1.
Fig. 7 is a schematic diagram showing an example of updated predictive conversion candidates.
Fig. 8 is a schematic diagram showing an example of predictive conversion candidates that are displayed on the display section at step 16.
Fig. 9 is a flow chart describing an example of a process that the control section performs after the user selects a pictorial symbol until he or she confirms the selected pictorial symbol.
Fig. 10A is a schematic diagram showing an example of a screen of the display section on which pictorial symbol conversion candidates are displayed.
Fig. 10B is a schematic diagram showing an example of an appearance on the display section when the cursor has been moved to a "pictorial symbols only" window that is located above characters "car".
Fig. 10C is a schematic diagram showing an example of an appearance on the display section when the cursor has been moved to a "character and pictorial symbol pair" window located below characters "car".
Fig. 10D is a schematic diagram showing an example of a pictorial symbol that is displayed on the display section at step 31.
Fig. 10E is a schematic diagram showing an example of a pair of characters and a pictorial symbol that are displayed on the display section at step 32.
Fig. 10F is a schematic diagram showing an example of characters that are displayed on the display section at step 33.
Fig. 11 is a flow chart describing another example of the process that registers characters and a pictorial symbol conversion candidate to the pictorial symbol conversion candidate storage section shown in Fig. 1.
Fig. 12A is a schematic diagram showing an example of an appearance on the display section when characters "kuru" have been input to the input section shown in Fig. 1.
Fig. 12B is a schematic diagram showing an example of an appearance on the display section when the character "car" have been touched with a user's finger to select the character "car".
Fig. 12C is an example of an appearance on the display section shown in Fig. 1 when one of the pictorial symbols that are displayed thereon has been touched.
Fig. 12D is a schematic diagram showing an example of an appearance on the display section when a selected pictorial symbol has been registered.
Fig. 13 is a flow chart describing an example of a process that the control section performs after the user touches a pictorial symbol that is displayed on the display section until input symbol is confirmed.
Fig. 14A is a schematic diagram showing that the position of "car" of conversion candidates that are displayed has been touched.
Fig. 14B is a schematic diagram showing an example of an appearance on the display section when an upward flick touch has been performed.
Fig. 14C is a schematic diagram showing an example of an appearance on the display section when a downward flick touch has been performed.
Fig. 14D is a schematic diagram showing an example of a pictorial symbol that is displayed on the display section at step 63.
Fig. 14E is a schematic diagram showing an example of a pair of characters and a pictorial symbol that are displayed on the display section at step 64.
Fig. 14F is a schematic diagram showing an example of characters that are displayed on the display section at step 65.

### BEST MODES THAT CARRY OUT THE INVENTION

Next, with reference to the accompanying drawings, embodiments of the present invention will be described. In the following description, it is assumed that the language used to input characters is Japanese. If any language other than Japanese is used to input characters, processes that input a pictorial symbol and add characters and a pictorial symbol that represents characters will be modified corresponding to the language that is beign used.

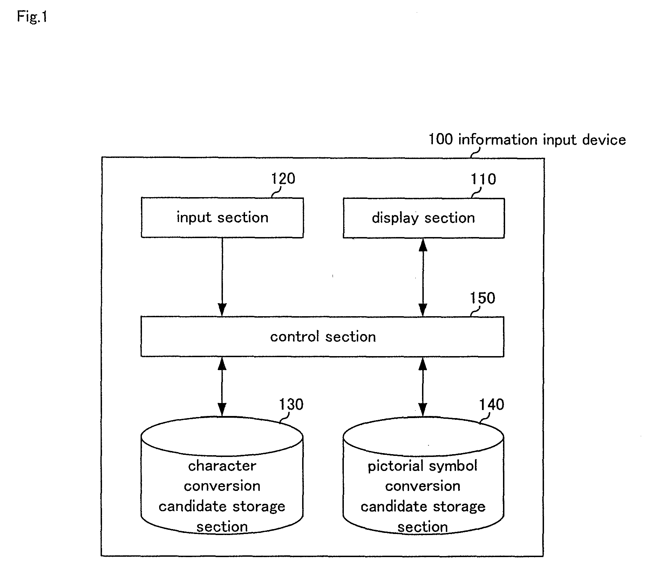

Fig. 1 is a schematic diagram showing an information input device according to an embodiment of the present invention.

As shown in Fig. 1, information input device 100 according to this embodiment is provided with display section 110, input section 120, character conversion candidate storage section 130 that is a first storage section, pictorial symbol conversion candidate storage section 140 that is a second storage section, and control section 150. Information input device 100 may be applied to a unit such as a mobile phone, a tablet type PC (Personal Computer), a note type PC, a smartphone, a PDA (Personal Digital Assistant), and a game machine. Fig. 1 shows only components according to the present invention of those that comprise information input device 100. For example, information input device 100 may be a unit that is provided with a communication section that communicates with another communication unit; an audio output section such as a speaker; and so forth. These components are omitted in Fig. 1.

Display section 110 is a display unit such as a color liquid crystal panel or an organic EL (Electro-Luminescence) that displays character data and pictorial symbol data. Alternatively, display section 110 may be a unit that is provided with a touch panel function.

When the user of information input device 100 operates input section 120, it inputs information that he or she has input to information input device 100. For example, input section 120 may be a component that has button keys. If display section 110 is provided with a touch panel function, display section 110 may also function as input section 120.

Character conversion candidate storage section 130 is a database that has stored conversion candidates of information that is input from input section 120 as first information.

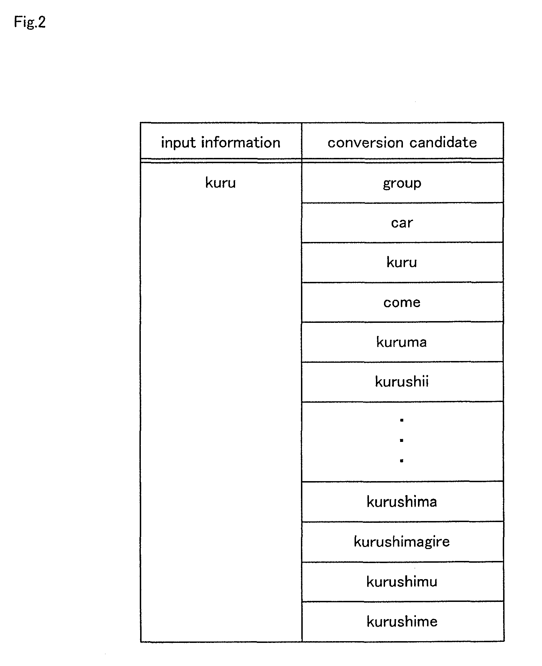

Fig. 2 is a schematic diagram showing an example of the first information stored in character conversion candidate storage section 130 shown in Fig. 1.

As shown in Fig. 2, character conversion candidate storage section 130 shown in Fig. 1 has correlatively stored input information and words that are conversion candidates corresponding to the input information. Conversion candidates may have been stored or newly stored using a commercially available conversion learning function. Alternatively, character conversion candidate storage section 130 may have not correlatively stored input information and conversion candidates (for example, an external memory or the like may have correlatively stored them). Alternatively, character conversion candidate storage section 130 may have stored only information that correlatively links input information and conversion candidates. In other words, character conversion candidate storage section 130 may obtain conversion candidates corresponding to input information as a search key.

For example, as shown in Fig. 2, input information "kuru" and conversion candidates "group", "car"(kuruma in Japanese), and "kuru" have been correlatively stored. In this case, if characters "kuru" are input to input section 120, conversion candidates corresponding thereto are "group", "car", "kuru", and so forth. These conversion candidates are displayed on display section 110. Thus, the first information is character data.

Pictorial symbol conversion candidate storage section 140 has correlatively stored the first information as conversion candidates stored in character conversion candidate storage section 130 and second information as pictorial symbol conversion candidates.

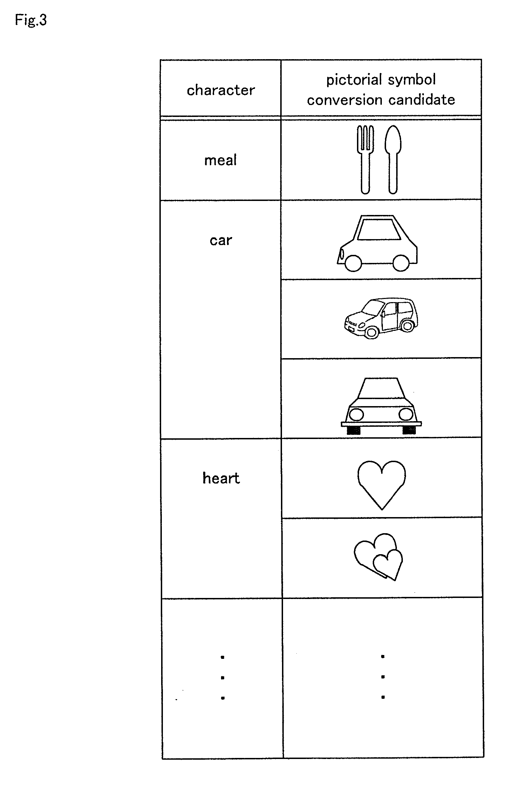

Fig. 3 is a schematic diagram showing an example of the first information and second information stored in pictorial symbol conversion candidate storage section 140 shown in Fig. 1.

As shown in Fig. 3, pictorial symbol conversion candidate storage section 140 have correlatively stored the first information (characters) and pictorial symbols as pictorial symbol conversion candidates corresponding thereto. Pictorial symbol conversion candidates may have been stored or may be registered by the user. Alternatively, pictorial symbol conversion candidate storage section 140 may have not correlatively stored characters and pictorial symbol conversion candidates (for example, an external memory or the like may have correlatively stored them). Alternatively, pictorial symbol conversion candidate storage section 140 may have stored only information that correlatively links characters and pictorial symbol conversion candidates. In other words, pictorial symbol conversion candidate storage section 140 may obtain pictorial symbol conversion candidates that correspond to characters as a search key.

For example, as shown in Fig. 3, characters "meal" and one pictorial symbol conversion candidate (a picture of a spoon and a fork) have been correlatively stored. In this case, if characters "meal" are selected from conversion candidates that correspond to information that has been input to input section 120 and then the characters are converted into a pictorial symbol, the picture of a spoon and a fork is a pictorial symbol conversion candidate. In addition, characters "car" and three pictorial symbol conversion candidates (pictures of cars) have been correlatively stored. In this case, if characters "car" are selected from conversion candidates corresponding to information that is input to input section 120 and then converted into a pictorial symbol, these three pictures of cars are pictorial symbol conversion candidates. In addition, characters "heart" and two pictorial symbol conversion candidates (pictures of hearts) have been correlatively stored. In this case, if characters "heart" are selected from conversion candidates corresponding to information that is input to input section 120 and then converted into a pictorial symbol, the two pictures of hearts are pictorial symbol conversion candidates. Thus, the second information is pictorial symbol data.

Control section 150 reads conversion candidates of information that has been input to input section 120 from character conversion candidate storage section 130. In addition, control section 150 causes the conversion candidates that have been read from character conversion candidate storage section 130 to be displayed on display section 110. Moreover, control section 150 reads second information correlated with the selected first information of those displayed on display section 110 from pictorial symbol conversion candidate storage section 140. One piece may be selected from those of the first information displayed on display section 110 as the user operates input section 120, for example, he or she moves the cursor. If display section 110 is provided with a touch panel function, one piece may be selected from those of the first information displayed on display section 110 as he or she touches display section 110. Furthermore, control section 150 causes the second information that has been read from pictorial symbol conversion candidate storage section 140 and third information in which the first information and the second information have been added to be displayed as conversion candidates on display section 110.

Next, an information input method that information input device 100 shown in Fig. 1 performs will be described. First, a process that registers characters and pictorial symbol conversion candidates in pictorial symbol conversion candidate storage section 140 shown in Fig. 1 will be described.

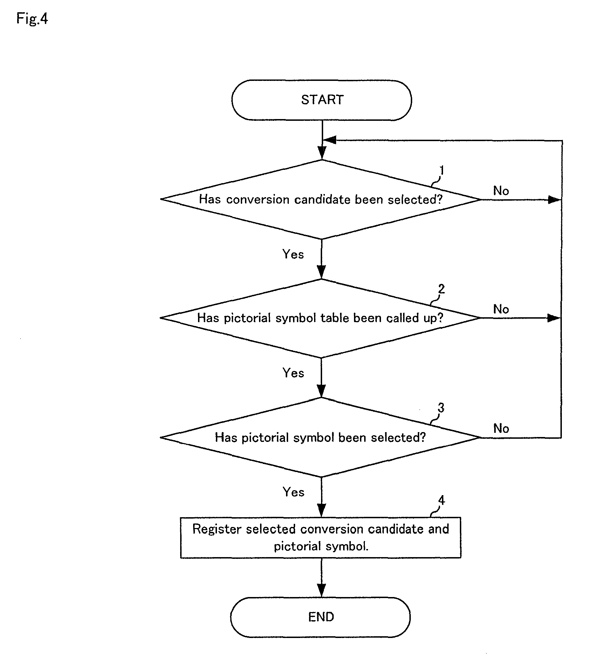

Fig. 4 is a flow chart describing an example of the process that registers characters and pictorial symbol conversion candidates in pictorial symbol conversion candidate storage section 140.

First, control section 150 determines whether a conversion candidate has been selected from those displayed on display section 110 corresponding to characters (information) that have been input to input section 120 at step 1.

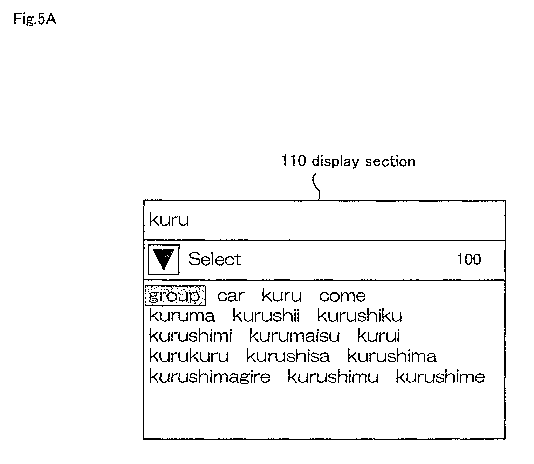

Fig. 5A is a schematic diagram showing an example of an appearance on display section 110 when characters "kuru" have been input to input section 120 shown in Fig. 1.

As shown in Fig. 5A, when characters "kuru" are input, conversion candidates correlated with characters "kuru" are read from character conversion candidate storage section 130 and are displayed on display section 110. When the user operates input section 120 or the like, for example, moves the cursor, he or she can select one of the conversion candidates. In Fig. 5A, characters "group" have been selected.

If control section 150 determines that one conversion candidate has been selected from those displayed on display section 110, control section 150 further determines whether or not a pictorial symbol table has been called.

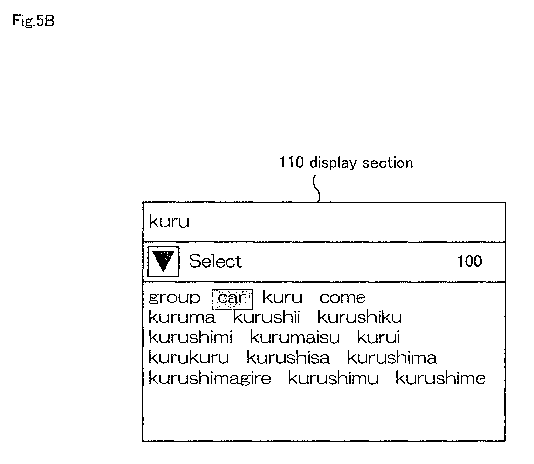

Fig. 5B is a schematic diagram showing an example of an appearance on display section 110 when the cursor has been moved and thereby characters "car" have been selected.

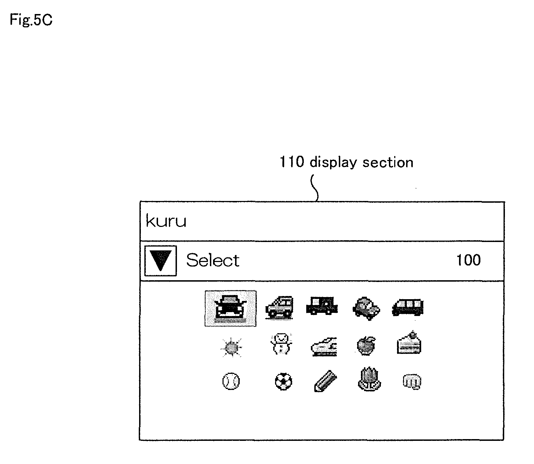

Fig. 5C is a schematic diagram showing an example of an appearance on display section 110 when a pictorial symbol table has been called.

As shown in Fig. 5B, after characters "car" have been selected from conversion candidates displayed on display section 110 and then the pictorial symbol table has been called up, pictorial symbols are displayed on display section 110 as shown in Fig. 5C. In this example, these pictorial symbols may have been stored in information input device 100. Alternatively, pictorial symbols may be read from another memory. Further alternatively, if information input device 100 is provided with a communication function, pictorial symbols may be downloaded from a predetermined server. The user's operation that causes pictorial symbols to be displayed on display section 110 is out of the scope of the present invention and thereby it is not limited in this specification.

Thereafter, control section 150 determines whether or not one pictorial symbol has been selected from those displayed on display section 110 as shown in Fig. 5C after the user has operated input section 120 or the like at step 3. When one pictorial symbol has been selected, the selected pictorial symbol is registered at step 4. The selected pictorial symbol and the selected conversion candidate are correlatively stored in pictorial symbol conversion candidate storage section 140.

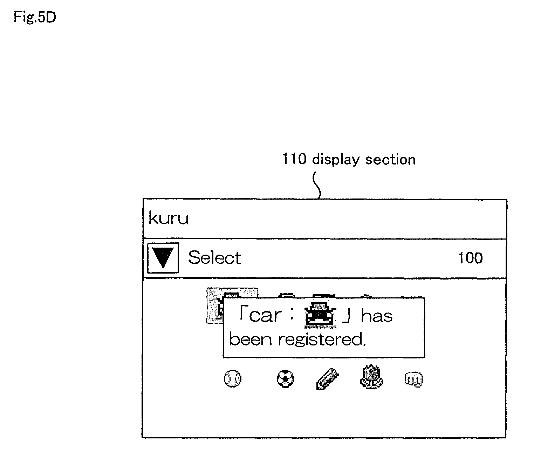

Fig. 5D is a schematic diagram showing an example of an appearance on display section 110 shown in Fig. 1 when one pictorial symbol has been selected from those displayed thereon and registered.

As shown in Fig. 5D, a message that denotes that the selected pictorial symbol and the conversion candidate corresponding thereto have been registered is displayed on display section 110.

Next, a process that control section 150 performs to cause pictorial symbols, as prediction conversion candidates, to be displayed on display section 110 will be described.

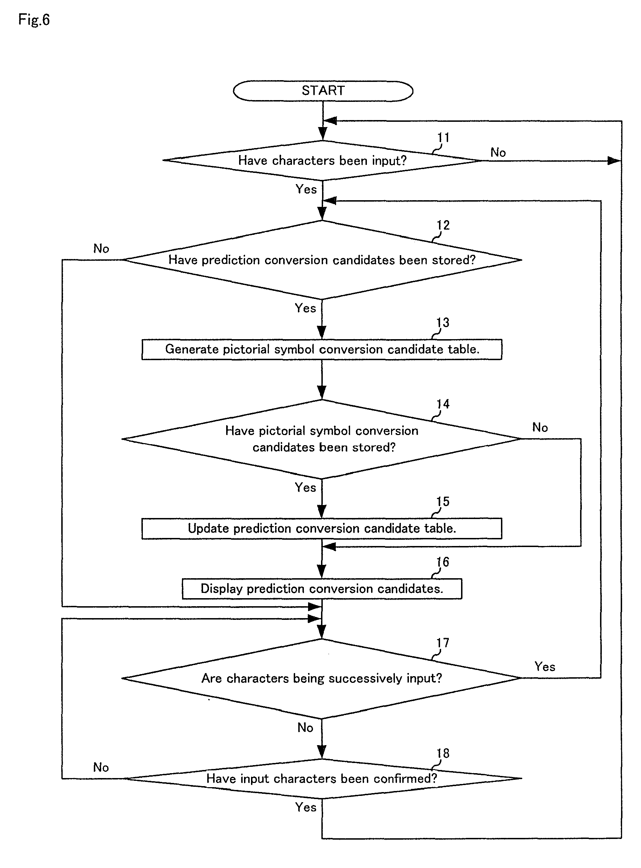

Fig. 6 is a flow chart describing an example of a process that control section 150 performs to cause pictorial symbols, as predictive conversion candidates, to be displayed on display section 110 shown in Fig. 1. In the following, this process is mainly performed by control section 150.

First, control section 150 determines whether or not characters (information) have been input to input section 120 after the user has performed a key operation or a touch operation.

If control section 150 determines that characters have been input, control section 150 further determines whether or not predictive conversion candidates that correspond to the input characters have been registered at step 12. Specifically, control section 150 determines whether or not conversion candidates and the input characteristics have been correlatively stored in character conversion candidate storage section 130.

If conversion candidates have been stored in character conversion candidate storage section 130, control section 150 generates data of a predictive conversion candidate table at step 13.

For example, if characters "kuru" are input, the corresponding correlated conversion candidates shown in Fig. 2 become data of the predictive conversion candidate table.

Thereafter, control section 150 searches pictorial symbol conversion candidate storage section 140 for pictorial symbol conversion candidates that correspond to each conversion candidate contained in the predictive conversion candidate table.

If the search result denotes that pictorial symbol conversion candidate storage section 140 has stored pictorial symbol conversion candidates that correspond to each conversion candidate contained in the predictive conversion candidate table, control section 150 updates the predictive conversion candidate table at step 15. Specifically, control section 150 updates the predictive conversion candidate table in such a manner such that conversion candidates are flagged with identification information depending on whether or not pictorial symbol conversion candidates that are correlated with conversion candidates have been stored in pictorial symbol conversion candidate storage section 140.

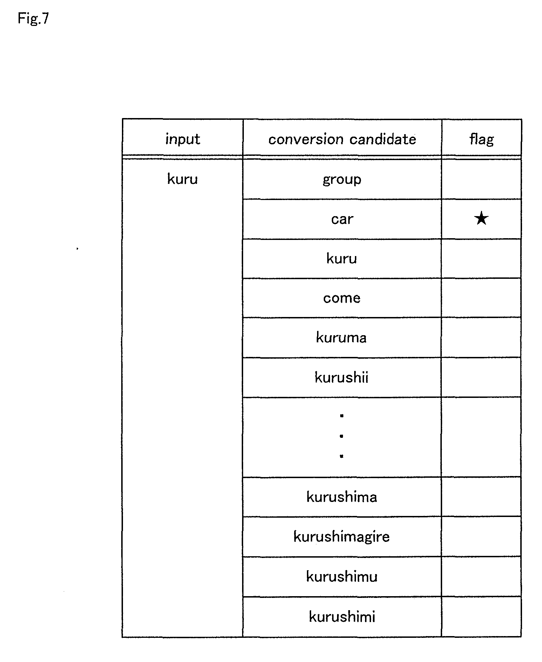

Fig. 7 is a schematic diagram showing an example of updated predictive conversion candidates. In this example, the case in which the foregoing registration process has been performed such that pictorial symbol conversion candidates that correspond to characters "car" have been stored in pictorial symbol conversion candidate storage section 140 will be described.

As shown in Fig. 7, characters "car" of conversion candidates have been flagged with an asterisk as identification information. Thus, in Fig. 7, conversion candidates correlated with pictorial symbols can be distinguished from conversion candidates that are not correlated with pictorial symbols.

Predictive conversion candidates are displayed on display section 110 at step 16. At this point, predictive conversion candidates that are flagged with the foregoing identification information (an asterisk shown in Fig. 7) are displayed in a format that is different from those that are not flagged with it.

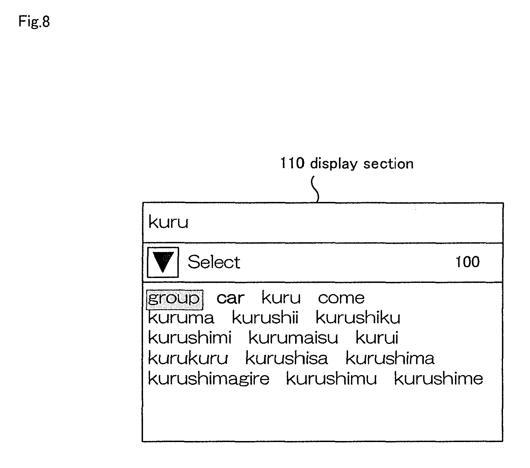

Fig. 8 is a schematic diagram showing an example of predictive conversion candidates that are displayed on display section 110 at step 16.

Assuming that predictive conversion candidates shown in Fig. 7 are displayed, the character "car" that is flagged with the identification information is highlighted with a bold font as shown in Fig. 8. Alternatively, a predictive conversion candidate flagged with the identification information may be highlighted in a color that is different from other predictive conversion candidates as long as it can be distinguished from the others.

In contrast, if pictorial symbol conversion candidates corresponding to conversion candidates contained in the predictive conversion candidate table have not been stored in pictorial symbol conversion candidate storage section 140 at step 14, control section 150 does not proceed to step 15, but proceeds to step 16.

Thereafter, control section 150 determines whether or not more characters are being input. For example, in Fig. 8, since characters "kuru" are being input, it is likely that character "ma" will follow.

If more characters are being input to input section 120, control section 150 determines that characters are successively input and proceeds to step 12.

In contrast, if control section 150 determines that more characters are not being input, control section 150 determines whether or not the user has confirmed the input characters after the user has operated input section 120 or the like at step 18.

If control section 150 determines that the user has confirmed the input characters, control section 150 proceeds to step 11.

In contrast, if control section 150 determines that the user has not confirmed the input characters, control section 150 proceeds to step 17.

Next, a process that control section 150 performs after the user selects a pictorial symbol until he or she confirms the selected pictorial symbol will be described.

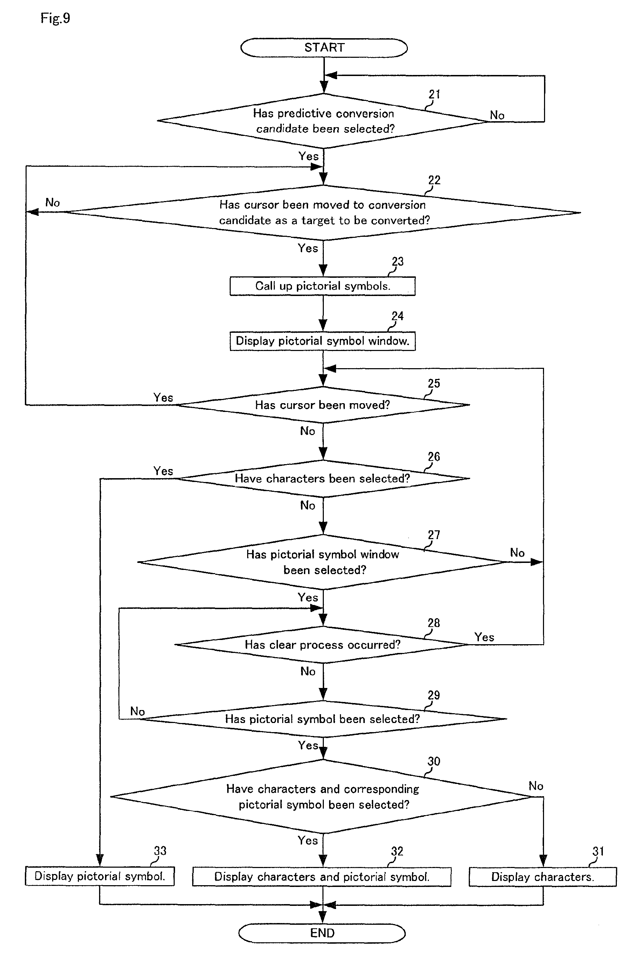

Fig. 9 is a flow chart describing an example of the process that control section 150 performs after the user selects a pictorial symbol until he or she confirms the selected pictorial symbol. This process is mainly performed by control section 150.

First, control section 150 determines whether or not a predictive conversion candidate has been selected from those candidates that correspond to characters that have been input after the user has operated input section 120 or the like at step 21.

In the example shown in Fig. 8, the cursor that selects a predictive conversion candidate is placed at the position of characters "group" and thereby characters "group" have been temporarily selected.

Thereafter, control section 150 determines whether or not the cursor has been moved to a conversion candidate as a target to be converted into a pictorial symbol of conversion candidates that are displayed at step 22.

If control section 150 determines that the cursor has been moved to a conversion candidate as a target to be converted into a pictorial symbol, control section 150 calls pictorial symbols that correspond to the conversion candidate at step 23. In other words, control section 150 reads pictorial symbol conversion candidates from pictorial symbol conversion candidate storage section 140 corresponding to the conversion candidate as a search key.

The pictorial symbol conversion candidates that have been read are displayed on display section 110 at step 24.

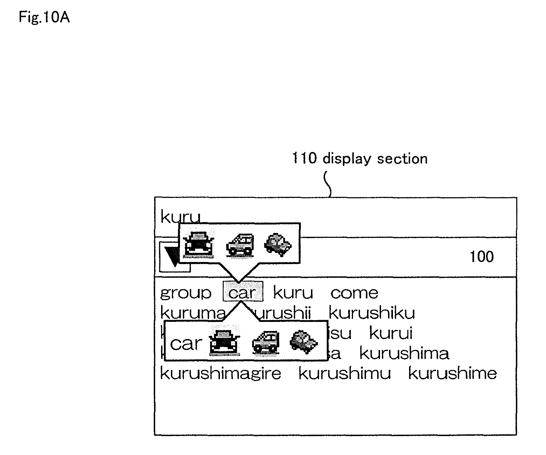

Fig. 10A is a schematic diagram showing an example of the screen of display section 110 on which pictorial symbol conversion candidates are displayed. In this example, the cursor has been moved to characters "car". In addition, characters "car" and three pictorial symbols have been correlatively stored.

As shown in Fig 10A, two pictorial symbol windows that are a "pictorial symbol only window" that contains only pictorial symbol candidates (second information) corresponding to characters "car" and a "character and pictorial symbol pair" window that contains third information in which a pictorial symbol candidate (second information) corresponding to characters "car" is added to characters "car" (first information). The third information is composed of characters "car" as the first information and three pictorial symbols as the second information that are displayed in the order.

Thereafter, control section 150 determines whether or not the cursor has been moved from the current position (from the position of characters "car" shown in Fig. 10A) at step 25.

If the cursor has been moved, the pictorial symbol window disappears. Thereafter, control section 150 proceeds to step 22. If the user operates, for example, the right arrow key or the like in the state shown in Fig. 10A, the cursor is moved to characters "kuru" and then the pictorial symbol window disappears.

In contrast, if the cursor has not been moved, control section 150 determines whether or not characters at the position of the cursor have been selected at step 26. For example, control section 150 determines whether or not characters have been selected using the selection key or the like in the state shown in Fig. 10A so as to select the characters on the cursor.

If the characters at the position of the cursor have not been selected, control section 150 determines whether or not one of two pictorial symbol windows has been selected at step 27. Specifically, control section 150 determines to which of the two pictorial symbol windows that are displayed on display section 110 the cursor has been moved. If the user operates the up arrow key or the like in the state shown in Fig. 10A, the cursor is moved to the "pictorial symbols only" window located above characters "car". In contrast, if the user operates the down arrow key or the like in the state shown in Fig. 10A, the cursor is moved to the "character and pictorial symbol pair" window located below characters "car".

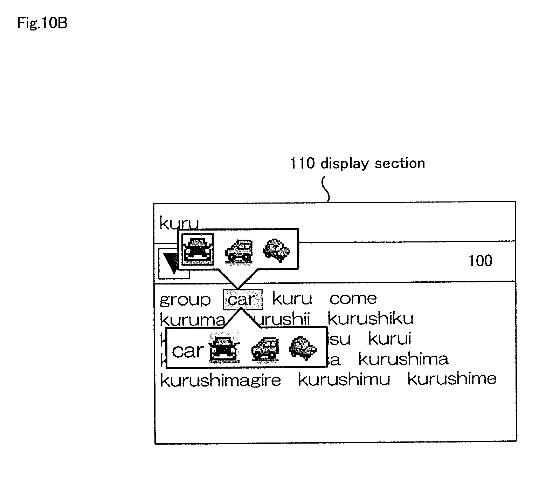

Fig. 10B is a schematic diagram showing an example of an appearance on display section 110 when the cursor has been moved to the "pictorial symbols only" window located above characters "car".

As shown in Fig. 10B, the cursor is moved to a pictorial symbol of the "pictorial symbols only" window located above characters "car".

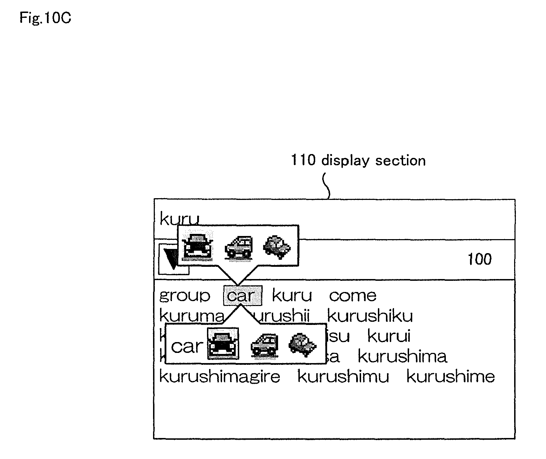

Fig. 10C is a schematic diagram showing an example of an appearance on display section 110 when the cursor has been moved to the "characters and pictorial symbols pair" window located below characters "car".

As shown in Fig. 10C, the cursor is moved to a pictorial symbol of the "characters and pictorial symbols pair" window located below characters "car".

If neither of the two pictorial symbol windows that are displayed has been selected, control section 150 proceeds to step 25.

In contrast, if one of the two pictorial symbol windows that are displayed has been selected, control section 150 determines whether or not a clear (cancellation) process has occurred since the user has already operated input section 120 or the like at step 28.

If the clear process has occurred, control section 150 again proceeds to step 25 where the pictorial symbol windows have not been displayed (in the state shown in Fig. 10A).

In contrast, if the clear process has not occurred, control section 150 determines whether or not one of pictorial symbols that are displayed has been selected at step 29. Specifically, control section 150 determines whether or not a pictorial symbol at the position of the cursor has been selected after the user has operated input section 120 or the like.

If any one of the pictorial symbols that are displayed has not been selected, control section 150 proceeds to step 28.

If any one of pictorial symbols that are displayed has been selected, control section 150 determines whether the selected pictorial symbol is one of those in the "pictorial symbols only" window or one of those in the "characters and pictorial symbols pair" window at step 30.

If the selected pictorial symbol is any one of those in the "pictorial symbols only" window, only the selected pictorial symbol is displayed on display section 110 at step 31.

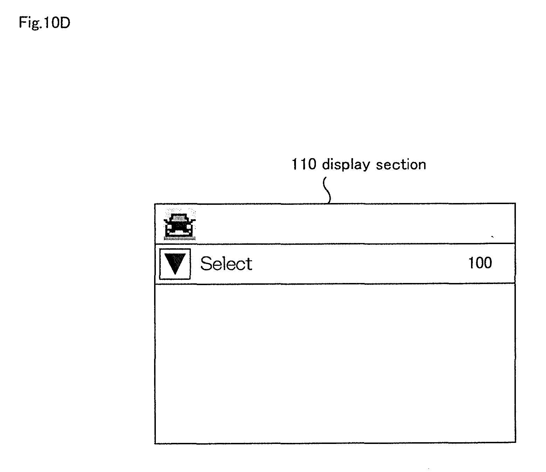

Fig. 10D is a schematic diagram showing an example of pictorial symbols that are displayed on display section 110 at step 31.

As shown in Fig. 10D, only pictorial symbols of cars are displayed on display section 110.

In contrast, if the selected pictorial symbol is any one of those in the "characters and pictorial symbols pair" window at step 30, the selected pictorial symbol and the conversion candidate will be displayed as a pair of characters and a pictorial symbol on display section 110 at step 32.

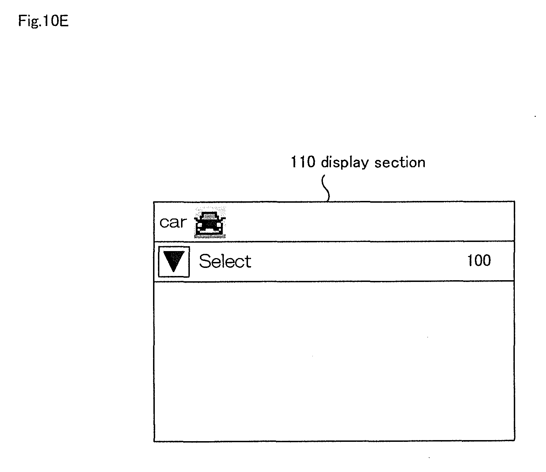

Fig. 10E is a schematic diagram showing an example of a pair of characters and a pictorial symbol that are displayed on display section 110 at step 32.

As shown in Fig. 10E, a pair of characters "car" and a pictorial symbol of "car" are displayed on display section 110.

If characters at the position of the cursor have been selected at step 26, the characters will be displayed on display section 110 at step 33.

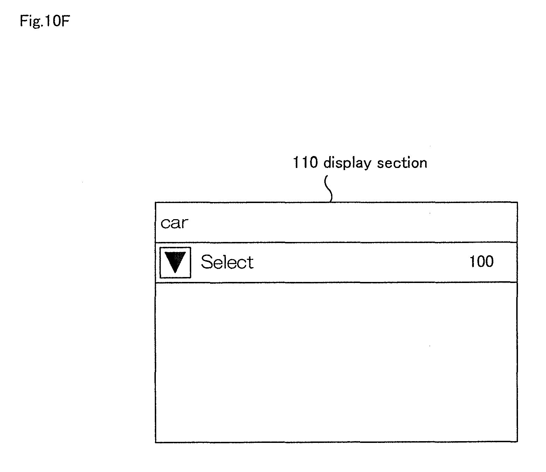

Fig. 10F is a schematic diagram showing an example of characters that are displayed on display section 110 at step 33.

As shown in Fig. 10F, characters "car" are displayed on display section 110.

Alternatively, the second information may be displayed in an upper hierarchical level and the third information may be displayed in a lower hierarchical level. In other words, the second information and the third information may not be displayed on display section 110 as shown in Fig. 10A at step 24. Instead, the second information may be displayed on display section 110. Only if the second information window is selected, the third information will be displayed. Alternatively, three or more windows will be displayed.

In the foregoing examples, the cursor is moved to select a desired conversion candidate. Alternatively, if display section 110 is provided with the touch panel function, a process will be performed based on touching on display section 110. Next, the process based on touching display section 110 will be described as another example of the information input process.

First, a process that registers characters and a pictorial symbol conversion candidate in pictorial symbol conversion candidate storage section 140 shown in Fig. 1 will be described.

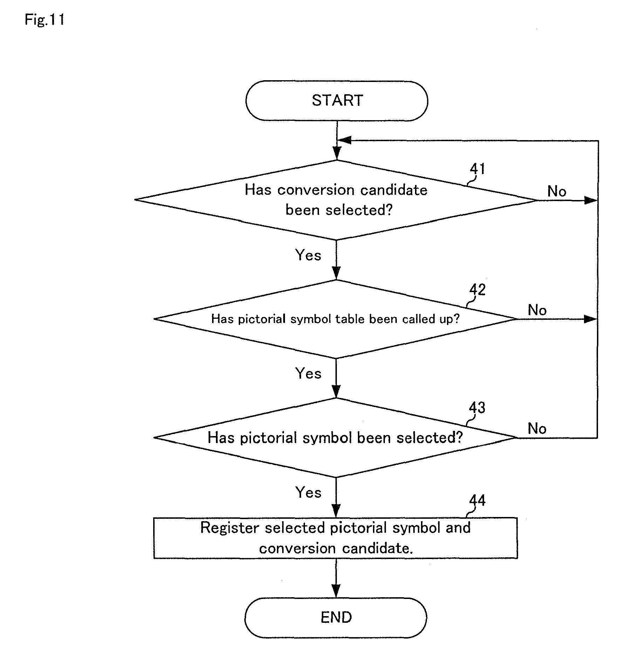

Fig. 11 is a flow chart describing another example of the process that registers characters and a pictorial symbol in pictorial symbol conversion candidate storage section 140.

First, control section 150 determines whether or not a conversion candidate displayed on display section 110 corresponding to characters (information) that have been input to input section 120 has been touched and selected.

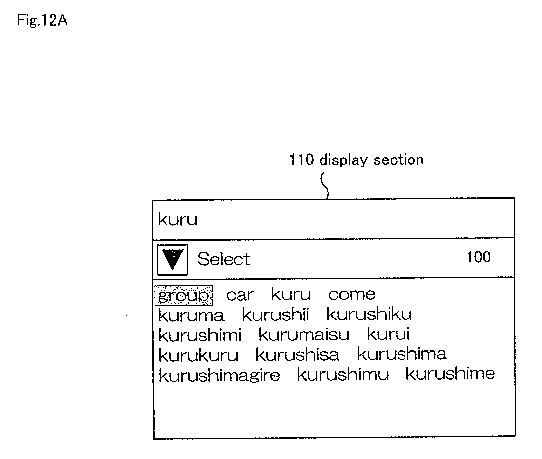

Fig. 12A is a schematic diagram showing an example of an appearance on display section 110 when characters "kuru" have been input to input section 120 shown in Fig. 1.

If characters "kuru" are input as shown in Fig. 12A, conversion candidates that have been stored in character conversion candidate storage section 130 corresponding to characters "kuru" as shown in Fig. 2 will be displayed on display section 110. When the user touches his or her desired conversion candidate displayed on display section 110, he or she can select his or her desired conversion candidate. In Fig. 12A, characters "group" have been selected.

If control section 150 determines that a conversion candidate displayed on display section 110 has been selected, control section 150 further determines whether or not a pictorial symbol table has been called up at step 42.

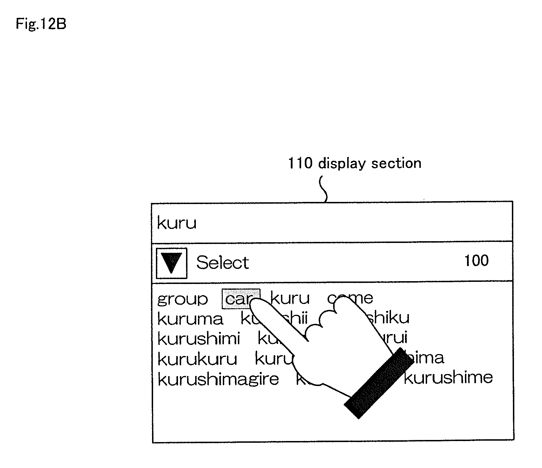

Fig. 12B is a schematic diagram showing an example of an appearance on display section 110 when characters "car" have been touched with a user's finger to select characters "car".

As shown in Fig. 12B, when the user touches characters "car", they are selected. As a result, a pictorial symbol table corresponding to characters "car" is called up and the pictorial symbols are displayed on display section 110. The pictorial symbol table is called up and displayed in the same manner as the foregoing example (pictorial symbols are displayed, as shown in Fig. 5C).

Thereafter, control section 150 determines whether or not any one of pictorial symbols displayed on display section 110 has been touched at step 43.

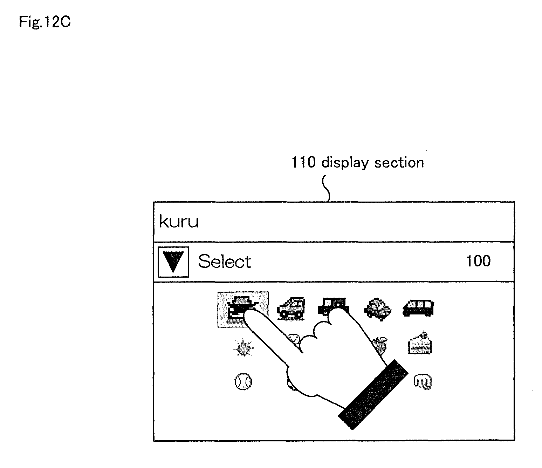

Fig. 12C is a schematic diagram showing an example of an appearance on display section 110 shown in Fig. 1 when one of pictorial symbols that are displayed thereon has been touched.

If any one of pictorial symbols displayed on display section 110 has been touched, as shown in Fig. 12C, control section 150 determines that the touched pictorial symbol has been selected and registered at step 44. The selected pictorial symbol is registered in the same manner as performed at step 4.

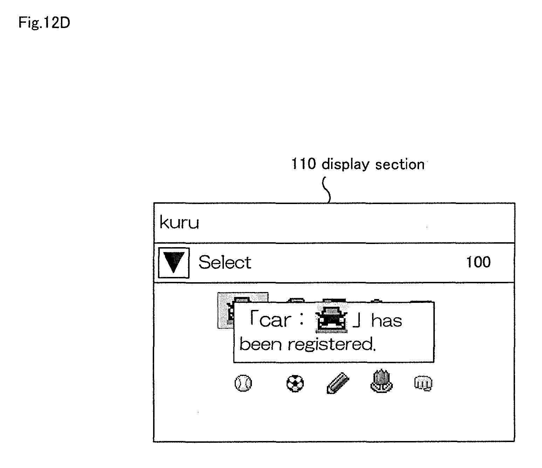

Fig. 12D is a schematic diagram showing an example of an appearance on display section 110 when a selected pictorial symbol has been registered.

As shown in Fig. 12D, a message that denotes that the selected pictorial symbol and the conversion candidate corresponding thereto have been registered is displayed on display section 110.

Next, a process that control section 150 that performs after the user touches a pictorial symbol that is displayed on display section 110 until he or she confirms the touched pictorial symbol will be described.

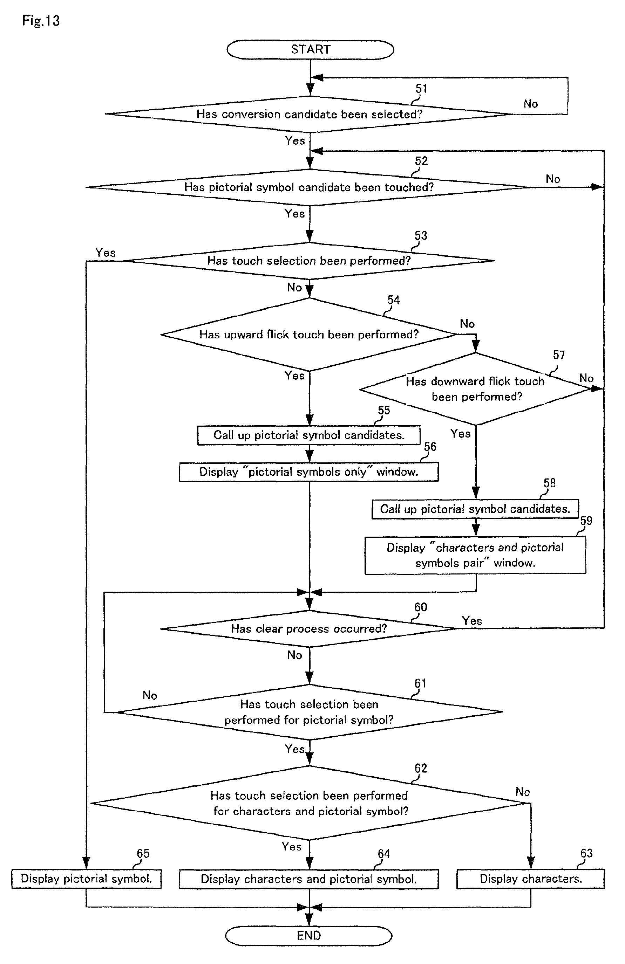

Fig. 13 is a flow chart describing an example of a process that control section 150 performs after the user touches a pictorial symbol that is displayed on display section 110 until input symbol is confirmed. In the following, the process is mainly performed by control section 150.

Control section 150 determines whether or not a predictive conversion candidate corresponding to input characters has been selected after the user has operated input section 120 or the like at step 51.

Thereafter, control section 150 determines whether or not the position of any of conversion candidates as a target to be converted into pictorial symbols of those that are displayed has been touched at step 52.

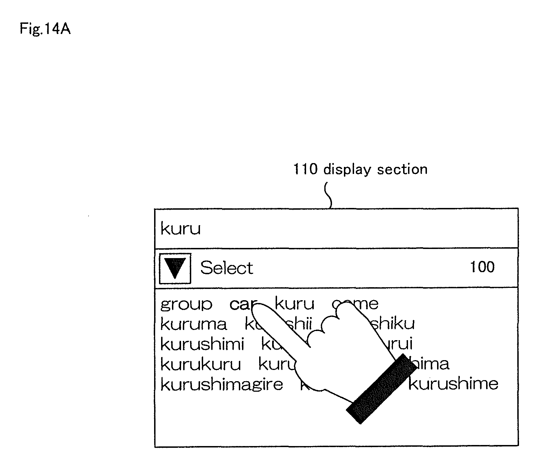

Fig. 14A is a schematic diagram showing the state that the position of "car" of conversion candidates that are displayed has been touched. In this example, "car" is a target to be converted into a pictorial symbol.

If control section 150 determines that the position of any of conversion candidates as a target to be converted into pictorial symbols (in this example, "car") has been touched, as shown in Fig. 14A, control section 150 performs a process corresponding to the touch pattern.

First, control section 150 determines whether or not the touch pattern is touch selection at step 53.

If the touch pattern is not a touch selection, control section 150 determines whether or not the touch pattern is an upward flick touch in which the screen of display section 110 is upwardly flicked (first touch pattern) at step 54.

If the touch pattern is an upward flick touch, pictorial symbol candidates correlated with the conversion candidate are read from pictorial symbol conversion candidate storage section 140 at step 55. Thereafter, a "pictorial symbols only" window that contains only pictorial symbol candidates that have been read is displayed on display section 110 at step 56.

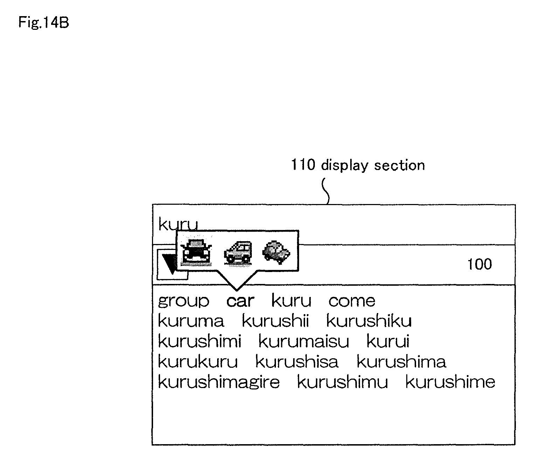

Fig. 14B is a schematic diagram showing an example of an appearance on display section 110 when the upward flick touch has been performed.

As shown in Fig. 14B, the "pictorial symbols only" window that contains only pictorial symbol candidates that have been read is displayed above characters "car" on display section 110.

In contrast, if the touch pattern is not an upward flick touch at step 54, control section 150 determines whether or not the touch pattern is a downward flick touch in which the screen of display section 110 is downwardly flicked (second touch pattern) at step 57.

If the touch pattern is a downward flick touch, pictorial symbol candidates that are correlated with the conversion candidate are read from pictorial symbol conversion candidate storage section 140 at step 58. Thereafter, the "characters and pictorial symbols pair" window containing the conversion candidate and the pictorial symbol candidates that have been read is displayed on display section 110 at step 59.

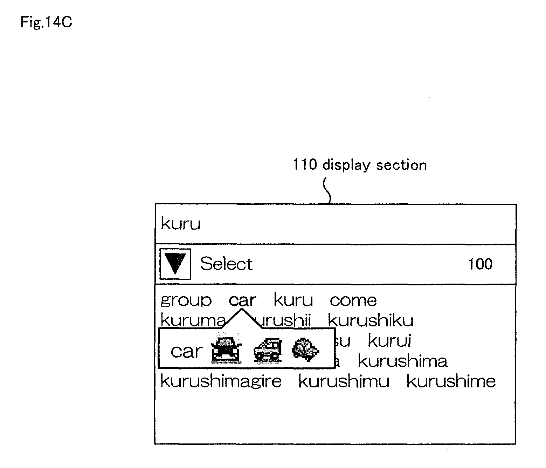

Fig. 14C is a schematic diagram showing an example of an appearance on display section 110 when a downward flick touch has been performed.

As shown in Fig. 14C, a "characters and pictorial symbols pair" window that contains the conversion candidate and pictorial symbol candidates that have been read is displayed below characters "car" on display section 110.

Thereafter, control section 150 determines whether or not the clear (cancellation) process has occurred after the user has operated input section 120 or the like at step 60.

If the clear process has occurred, the displayed pictorial symbol window disappears from display section 110 and then control section 150 proceeds to step 52.

In contrast, if the clear process has not occurred, control section 150 determines whether or not touch selection has been performed for any pictorial symbol, namely whether any one of pictorial symbols that are displayed has been touched at step 61.

If touch selection has not been performed for any displayed pictorial symbol, control section 150 proceeds to step 60.

In contrast, if touch selection has been performed for any displayed pictorial symbol, control section 150 determines whether the pictorial symbol for which touch selection has been performed is any one of the pictorial symbols that are contained in the "pictorial symbols only" window or any one of the symbols that are contained in the "characters and pictorial symbols pair" window.

If the pictorial symbol for which touch selection has been performed is any one of the symbols that are contained in the "pictorial symbols only" window, only the pictorial symbol for which touch selection has been performed is displayed on display section 110 at step 63.

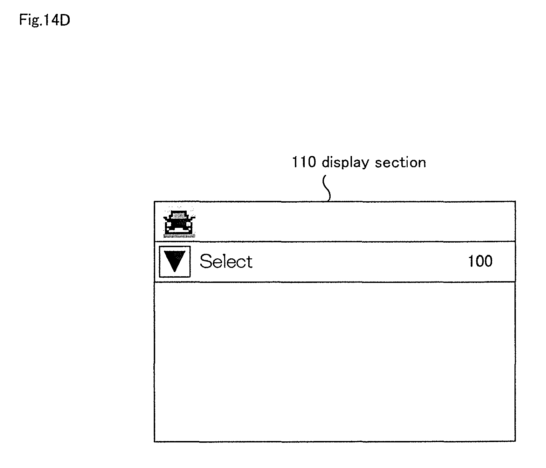

Fig. 14D is a schematic diagram showing an example of a pictorial symbol displayed on display section 110 at step 63.

As shown in Fig. 14D, only the pictorial symbol of a car is displayed on display section 110.

In contrast, if the pictorial symbol for which touch selection has been performed is one of those contained in the "characters and pictorial symbols pair" window, the pictorial symbol for which touch selection has been performed and the conversion candidate are displayed as a pair of characters and a pictorial symbol on display section 110 at step 64.

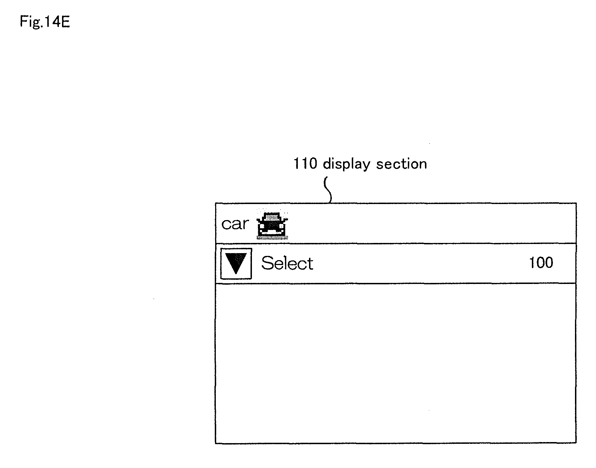

Fig. 14E is a schematic diagram showing an example of a pair of characters and a pictorial symbol displayed on display section 110 at step 64.

As shown in Fig. 14E, a pair of characters and a pictorial symbol of "car" are displayed on display section 110.

If the touch pattern is touch selection at step 53, characters for which touch selection has been performed are displayed on display section 110 at step 65.

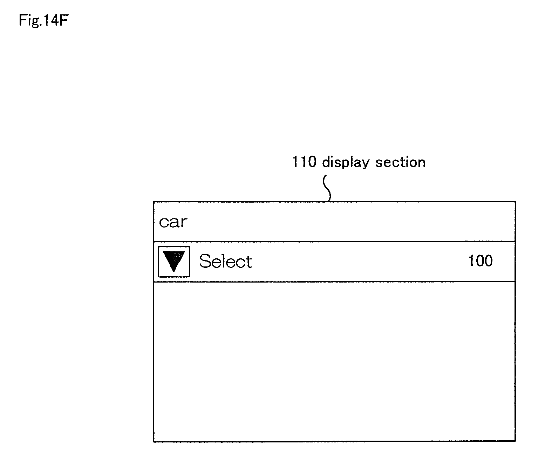

Fig. 14F is a schematic diagram showing an example of characters that are displayed on display section 110 at step 65.

As shown in Fig. 14F, characters "car" are displayed on display section 110.

Conversion candidates may be displayed corresponding to predetermined rules, selected frequencies, or selected orders.

Pictorial symbol data may include other information such as face symbols, face signs, and image data for decoration mail.

As described above, the present invention can provide the following effects.

First, since a single pictorial symbol and a pair of characters and a pictorial symbol corresponding thereto can be input in the same manner, the user can easily and conveniently operate the devices, methods, and programs of the present invention.

In addition, since a single pictorial symbol and a pair of characters and a pictorial symbol corresponding thereto can be input in the same manner, the opportunity to use a pair of characters and a pictorial symbol corresponding thereto will increase.

These effects could increase the opportunity to use pictorial symbols, the packet size of each electronic mail, and ARPU (Average revenue Per User) of each carrier.

The process performed by each structural component of information input device 100 may be performed by a logic circuit manufactured corresponding to the purpose. A computer program that codes procedures of processes (hereinafter referred to as the program) may be recorded on a record medium that can be read by information input device 100 and executed. The record medium from which data can be read by information input device 100 includes a movable record medium such as a floppy disk (registered trademark), a magneto-optical disc, a DVD, or a CD; a memory built in information input device 100 such as a ROM or a RAM; or an HDD. The program recorded on the record medium is read by control section 150 with which information input device 100 is provided and the foregoing processes are performed under the control of control section 150. Control section 150 operates as a computer that executes the program that is read from the record medium on which the program is recorded.

The present invention has been described with reference to the embodiments. However, it should be understood by those skilled in the art that the structure and details of the present invention may be changed in various manners without departing from the scope of the present invention.

The present application claims a priority based on Japanese Patent Application JP 2011-087429 filed on April 11, 2011, the entire contents of which are incorporated herein by reference in its entirety.

## Claims

1. An information input device, comprising:
a display section;
an input section that inputs information;
a first storage section that stores conversion candidates of said information as first information;
a second storage section that correlatively stores said first information and said second information; and
a control section that reads said first information that is conversion candidates of the information that has been input to said input section, causes the first information that has been read to be displayed as conversion candidates on said display section, reads said second information correlated with the selected first information from said second storage section if the first information displayed on said display section is selected, and causes said second information and third information in which said first information and said second information are added to be displayed as conversion candidates on said display section.

2. The information input device as set forth in claim 1,
wherein said control section determines whether or not the first information displayed on said display section has been selected as the information that has been input to said input section.

3. The information input device as set forth in claim 2,
wherein said display section is provided with a touch panel function, and
wherein said control section inputs information to said input section as said display section is touched.

4. The information input device as set forth in claim 3,
wherein said control section causes said second information to be displayed on said display section if said display section is touched in a first touch pattern and said third information to be displayed on said display section if said display section is touched in a second touch pattern.

5. The information input device as set forth in any one of claims 1 to 4,
wherein said control section causes said first information stored in said second storage section to be displayed in a manner different from that for said first information not stored in said second storage section.

6. The information input device as set forth in any one of claims 1 to 5,
wherein said first information is character data and said second information is pictorial symbol data.

7. An information input method, comprising the processes of:
inputting information to a device;
reading first information that is conversion candidates of said input information from a first storage section that has stored the first information;
displaying the first information that has been read from said first storage section as conversion candidates;
reading second information correlated with the selected first information from a second storage section that has correlatively stored said first information and said second information if said displayed first information is selected; and
displaying the second information that has been read from said second storage section and third information in which said second information is added to said first information as conversion candidates.

8. A program that causes a computer to execute the procedures comprising:
inputting information to a device;
reading first information that is conversion candidates of said input information from a first storage section that has stored the first information;
displaying the first information that has been read from said first storage section as conversion candidates;
reading second information correlated with the selected first information from a second storage section that has correlatively stored said first information and said second information if said displayed first information is selected; and
displaying the second information that has been read from said second storage section and third information in which said second information is added to said first information as conversion candidates.
